# EUROPEAN PATENT SPECIFICATION

(11) **EP 2 953 905 B1**
(45) Date of publication and mention of the grant of the patent: **23.05.2018**
(21) Application number: 14712696.5
(22) Date of filing: 11.02.2014
(51) Int. Cl.: C02F 3/28, B01D 53/52, C02F 1/20, C02F 5/06, C02F 103/10, C02F 101/20

(54) **A METHOD FOR TREATING SULPHATE - CONTAINING WATERS**
VERFAHREN ZUR BEHANDLUNG VON SULFATHALTIGEM WASSER
PROCÉDÉ DE TRAITEMENT D'EAUX CONTENANT DU SULFATE

(30) Priority: 11.02.2013 FI 20130043
(43) Date of publication of application: 16.12.2015
(73) Proprietor: Sulfator Oy, 02240 Espoo (FI)
(72) Inventor: AUROLA, Artto, 02150 Espoo (FI)
(74) Representative: Berggren Oy, Helsinki & Oulu
(86) International application number: PCT/FI2014/050100
(87) International publication number: WO 2014/122365

(56) References cited:
- US-A- 4 839 052
- US-A- 5 076 927
- US-A1- 2008 038 184

## Description

The invention presented here focuses on a method for processing cold sulphate-containing water. Specifically, the invention focuses on a method for treating sulphate-containing water, which utilizes energy recovered during the process.

### Background

Sulphate is a significant problem in the mining industry, and no processing method exists that is sufficiently efficient, either technically or economically. This increases required investment costs, raises operating costs and/or makes it difficult to obtain regulatory approval (environmental permit). These factors may limit or delay the commencement of mining operations, and may even lead to their cessation.

Untreated water also causes serious threats to the environment, where sulphate causes stratification of water and, on reduction, even toxicity.

Currently used methods of sulphate removal are lime precipitation, reverse osmosis, and bacterial treatment.

Reverse osmosis can remove sulphate effectively, but its problem is high energy consumption, resulting in high operating costs. Another problem with reverse osmosis is clogging of the necessary reverse osmosis membrane, which also contributes to costs.

The problem with lime precipitation is the large amount of lime required, which typically has to be transported over long distances. Hence, this method is also subject to high costs. A further problem is the large amount of insoluble gypsum generated and the resulting storage difficulties.

The problem with bacterial treatment is that the process is difficult to start, slow, has a large space requirement, and is difficult to manage and optimize. Typically, the cycle of the seasons also affects processing conditions, making the process more difficult to control.

Publication US2008038184 A1 presents a method for producing sulphur oxides from waste water containing hydrogen sulphide. In this method waste water from an anaerobic bioreactor is supplied to a low-pressure scrubber, where it is placed in contact with steam. Water is condensed out of the resulting hydrogen sulphide-containing scrubber gas to produce a concentrated stream of hydrogen sulphide. The hydrogen sulphide in the hydrogen sulphide stream is incinerated to produce sulphur oxides.

### Summary

The purpose of the process contained by the invention is to make the removal of sulphate from cold sulphate-containing water more efficient. A further objective of the invention is to increase the general and operational reliability of biological desulphation.

Earlier processes, using sulphate-reducing bacteria, have failed to take advantage of the ability of some sulphate-reducing anaerobic bacteria to increase the efficiency of the desulphation process by producing hydrogen sulphide from sulphate.

To produce hydrogen sulphide and control the process, an anaerobic bioreactor is needed, into which sulphate-containing water is passed.

The yield of hydrogen sulphide is maximized preferably by adjusting the processing conditions and by stabilising the anaerobic bacterial strain that reduces sulphate to hydrogen sulphide in the bioreactor; the quantity of nutrients required by the bacterial strain, such as carbon, nitrogen, and phosphorus; and the prevailing pH, pressure, and temperature. In addition, the yield is maximized preferably by removing substances harmful to the bioreactor bacteria as necessary from the sulphate-containing water entering the bioreactor. The adjustment and stabilization of bioreactor conditions in relation to the nutrients required by the bacteria, the prevailing pH, the temperature, and the removal of harmful substances, can be done by modifying either the supply of sulphate-containing water to the bioreactor or the water in the bioreactor itself, according to those parameters.

The hydrogen sulphide produced by the bioreactor is incinerated in a hydrogen sulphide incineration unit, which produces a substantial amount of energy. The energy thus generated is used in heating the bioreactor.

Similarly, the warm water removed from the bioreactor can preferably be stored for instance using heat pumps. The energy thus produced can preferably be returned as needed to the bioreactor, or it can be utilized elsewhere in the facility. The SO₂ produced by incineration of hydrogen sulphide can be transferred preferably to a catalytic converter (conversion) in which the SO₂ is oxidized to SO₃. Preferably, the heat energy released in conversion can be returned as required to the bioreactor, or it can be used elsewhere in the facility.

Specifically, the invention relates to a method for processing cold sulphate-containing water, characterised in that the sulphate-containing water is processed in very cold conditions, at temperatures close to 0 °C. According to the invention said method comprises the steps in which
(i) cold sulphate-containing water is directed into a bioreactor,
(ii) the anaerobic bacterial strain in the bioreactor, which reduces sulphate to hydrogen sulphide, converts the sulphate content of the water to hydrogen sulphide gas,
(iii) the resulting hydrogen sulphide gas is separated from the water and directed for incineration in a hydrogen sulphide incineration unit, which generates combustion gases, and
(iv) residual water is removed from the bioreactor and the thermal energy contained in the water is captured, and;
(v) energy released in steps (ii) - (iii) is captured and utilized in said method, wherein the temperature of the bioreactor is maintained at the temperature best suited for the bacterial strains that produce hydrogen sulphide, wherein the bioreactor is heated by the thermal energy captured in steps (iv) and (v).

According to one implementation here described, the sulphur dioxide resulting from incineration of hydrogen sulphide can be recovered from the combustion gases by absorption of SO₃, in which case the sulphur trioxide can produce sulphuric acid, which can be sold for further use in various industrial processes, or used to fulfill the needs of the facility.

According to one implementation here described, the pH of water removed from the bioreactor can be adjusted and, if necessary, environmentally harmful substances can be removed preferably by precipitation of metals, which can be preferably carried out in a precipitation reactor (such as a lime reactor). In the process, a possible second precipitation reactor can be placed before the bioreactor, if necessary, to remove metals harmful to bacterial activity. The precipitation reactor used to remove sulphate and metals should be positioned after the bioreactor, when the compound to be precipitated is used only for the removal of metals and residual sulphate from water leaving the bioreactor. According to one implementation here described, it can be useful to include a bioreactor bypass, allowing sulphate-containing water to be directed past the bioreactor and directly to the precipitation reactor. This improves water management in the event of a possible fault or failure, ensuring that energy production continues safely and in an environmentally friendly manner.

According to one implementation here described, the water led to the bioreactor is optimised for bacterial action by including a precipitation reactor before the bioreactor, so that substances detrimental to bacterial action can be removed, as well as sulphates when necessary (e.g., due to maintenance or malfunction of the bioreactor). If necessary, the precipitation reactor placed before the bioreactor can act as a lime reactor. This embodiment has the advantage that fewer separate processing units are needed.

In a process here described, a bioreactor bypass can also be added to the precipitation reactor ahead of the bioreactor. In this case, when the bioreactor is not in use, the preceding precipitation reactor, in which substances detrimental to bacterial action are removed, can also be used for the removal of sulphate (and possibly other environmentally harmful substances). In this case, water from the precipitation reactor preceding the bioreactor can be guided past the bioreactor and directly into the environment, and the precipitation reactor following the bioreactor is not required.

### Description of figures

Figure 1 shows a sulphate removal process in its simplest form, outside of the scope of the invention.
Figure 2 shows a similar process, also outside of the scope of the invention, with the addition of removal of harmful substances.
Figure 3 shows a similar process, also outside of the scope of the invention, with the addition of removal of harmful substances and a precipitation reactor.
Figure 4 shows a similar process, according to the invention, with the addition of removal of harmful substances, a precipitation reactor, and bioreactor warming.
Figure 5 shows a similar process, with the addition of removal of harmful substances, a precipitation reactor, bioreactor warming, and sulphuric acid production.
Figure 6 shows a similar process, in which all energy flows from heat-generating subjects are gathered and used to stabilize conditions in the bioreactor.

### Detailed description

In this disclosure, the term H₂S-incineration or H₂S incinerator means a device capable of converting hydrogen sulphide to a gas containing sulphur dioxide, and in which heat energy is produced and from which heat energy can be recovered.

In this disclosure, the term conversion means the catalytic conversion of sulphur dioxide to sulphur trioxide, using an apparatus that produces heat energy and from which heat energy can be recovered.

In this disclosure, the term absorption refers to equipment that can produce sulphuric acid from sulphur trioxide, while producing heat energy from the said reaction, and from which heat energy can be recovered.

Heat produced by the different reactions and units can be recovered using typical commercially available devices such as heat exchangers or heat pumps.

In this disclosure, the term precipitation reactor means a device or unit, in which metals can be precipitated preferably as sulphides and/or hydroxides. A precipitation reactor may be, for instance, a lime reactor, in which a calcium compound acts as the reactive compound.

In this disclosure, the term feed water pretreatment means a unit in which the quality of water to be fed to the bioreactor may be modified, for example optimised for bacterial activity, before being supplied to the bioreactor. Feed water pretreatment may also include a precipitation reactor.

In this disclosure, the term bioreactor means a reactor containing microbes, such as bacteria, which can reduce sulphur, such as sulphate.

The above-described devices are commercially available devices.

The presented disclosure discloses a method, which in its most general form does not fall within the scope of the invention as defined in the claims, said method being for processing sulphur-containing water. The method contains steps in which
(i) sulphur-containing water is directed into a bioreactor,
(ii) the anaerobic bacterial strain in the bioreactor, which reduces sulphate to hydrogen sulphide, converts the sulphate content of the water to hydrogen sulphide gas,
(iii) the resulting hydrogen sulphide gas is separated from the water and directed for incineration in a hydrogen sulphide incineration unit, which generates combustion gases, and
(iv) energy released in steps (ii) - (iii) is captured and utilized in this process, and residual water is removed from the bioreactor.

According to an implementation of the disclosure the conditions in the bioreactor are adjusted so as to maximize the production of hydrogen sulphide, which conditions are selected from the group of the bioreactor's nutrient content, temperature, pH, and reactor pressure. In order to maximize production of hydrogen sulphide, favourable conditions are created in the bioreactor for a bacterial strain that reduces sulphate to hydrogen sulphide. First, the surface area available to bacteria in the bioreactor is maximized, preferably by adding e.g. plastic items with numerous perforations to the bioreactor. Also, the material of these items and/or of the walls of the bioreactor and/or the coating materials of these items and/or the walls can be optimized for bacterial action. These materials may preferably also contain suitable bacterial action enhancing agents, such as catalysts. The size of the bioreactor, and the size and number of items, is designed to achieve the shortest possible processing time and best possible yield of hydrogen sulphide.

To stabilize the process, for instance to eliminate the effects of seasonal changes, and to maximize the yield of hydrogen sulphide from bacterial action, the bioreactor's temperature, pressure, and pH, and the nutrients required by the bacteria, should be preferably standardized. For example, the sulphur content of the water supplied to the bioreactor may vary considerably over time. Preferably, the sulphur content should be between 3-30 g/l, most preferably 5-25 g/l. Preferably, the sulphur should be in sulphate form.

According to one implementation of the disclosure, substances harmful to the anaerobic bacterial strain that reduces sulphate to hydrogen sulphide are removed from the sulphate-containing water entering the bioreactor. Removable substances detrimental to bacterial activity include, for example, heavy metals and toxic substances. At the same time, for instance compounds containing elements such as As, Ni, and Co can be recovered.

Thus, if necessary, the pH of the bioreactor can be adjusted, its pressure can be adjusted, it can be heated or cooled, and if necessary nutrients and/or trace elements can be added or removed. These steps or some of them may be implemented by modifying or manipulating a) the sulphate-containing water entering the bioreactor, b) the water in the bioreactor c) by passing some other liquid into the bioreactor, and/or d) by adding one or more extra liquid cycles to the bioreactor.

According to one implementation of the disclosure, in an extra cycle of the bioreactor, the water taken from the bioreactor is conducted for adjustment into a separate unit, from which the water is fed back into the bioreactor. The separate unit may contain, for example heat exchangers, meters, pH regulators, nutrient addition or removal units, heat pumps, evaporator units required for refrigeration, pressure control devices or similar. Naturally, corresponding functions or equipment can also be placed inside the bioreactor. Where necessary, the water leaving the bioreactor can also be recycled back to the bioreactor and the recycled water can be adjusted for above-described parameters, such as pH, temperature and nutrient content.

The pH of the water in the bioreactor should preferably be around 5, so that sulphide sulphur occurs mainly as hydrogen sulphide. The pH of the bioreactor can be adjusted as needed by directing, for example, acidic process water from other processes into the bioreactor. In order to maximise the bioreactor's yield of hydrogen sulphide, of course the bioreactor requires appropriate concentrations of nutrients, i.e. the C:N:P ratio should be favourable for bacteria reducing sulphate to hydrogen sulphide. The operation of sulphate-reducing bacteria requires the availability of organic matter to be oxidized. The nutrient content of the bioreactor can be preferably adjusted by directing into the bioreactor water from other processes, containing nutrients needed in the bacterial metabolism, such as nitrogen, organic carbon, phosphate and trace elements. Sources for the anaerobic bacterial strains used to reduce sulphate to hydrogen sulphide in the bioreactor may include preferably domestic sewage acquired from the intake screens of activated sludge plants for residential waste, the sludge in methane tanks, and bacteria occurring in agricultural sludge.

The preferable operating temperatures for different sulphate-reducing bacterial strains vary considerably. It has been observed that reduction can occur even at temperatures below ten degrees, but the main area of operation is mesophilic, i.e. in a temperature range of 20-30 °C, an d possibly even in a range of 20-40 °C, depending on the bacterial strain.

As contained by the disclosure, the bioreactor can be heated and mesophilic temperatures achieved preferably using heat produced by reactions in the further processing of sulphur.

According to one implementation of the disclosure, the energy to heat the bioreactor is obtained from incineration of hydrogen sulphide. The essential combustion reaction of hydrogen sulphide is shown in equation (1). It can be seen from the values of ΔG and ΔH in the equation that the reaction is thermodynamically favourable and highly exothermic.

(1) 2 H₂S⁻ + 3 O₂ -------- > 2 SO₂ + 2 H₂O

ΔG = -991 kJ/mol ΔH = -996 kJ/mol

One mole of hydrogen sulphide, i.e. the combustion of 34 grams, thus produces 498 kJ of energy, so the energy produced by combustion of one kilogram is 15 MJ. This is of the same order of magnitude as the calorific value of wood.

The water to be treated can contain several grams of sulphate per litre. If the water contains, for example, 5 g/l of sulphate, the amount of hydrogen sulphide produced by one cubic meter of water is 52 moles, and the amount of heat generated is 26 mJ. This is sufficient heat to warm a cubic metre of water to around six degrees Celsius. Thus, if the water contains large amounts of sulphate and the sulphate-containing water is too cold for the bacteria that reduce sulphate to hydrogen sulphide, the process contained by the disclosure allows the bioreactor to be preferably heated using energy efficiently available from continuing processing, so that the throughput time for treating sulphate-containing water can be significantly reduced. If necessary, the process can also take advantage of heat generated by some other nearby process, such as a power plant.

In one implementation of the disclosure, the sulphur dioxide-containing combustion gas produced in the hydrogen sulphide incineration unit is passed to a converter (conversion unit), in which sulphur dioxide is catalytically oxidized to sulphur trioxide.

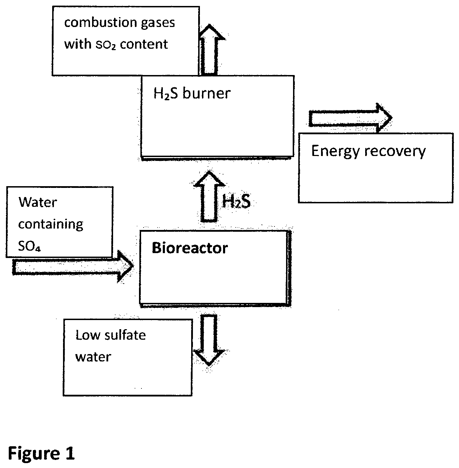

Figure 1 shows the general form of the process contained by the disclosure. Here, sulphate-containing water is conducted preferably into a closed anaerobic bioreactor, preferably containing fillers. The bacterial strain in the bioreactor converts the sulphate content of the water into hydrogen sulphide gas, so that the sulphate content of the water leaving the bioreactor is much lower than that of the sulphate-containing water directed into the bioreactor. The hydrogen sulphide created in the bioreactor is directed to a hydrogen sulphide incineration unit (H₂S incinerator) in which hydrogen sulphide combusts, producing sulphur dioxide and also efficiently developing heat. The resulting heat energy can be used, for example, to produce electricity. In addition, heat energy in the combustion gases from hydrogen sulphide incineration can be recovered preferably using heat exchangers. Thus environmentally problematic sulphate-containing water is purified and at the same time produces energy.

The phases of the process shown in Figure 1 can naturally be connected with any treatments that are preferable in terms of the final outcome of the process. The process in Figure 1 can also include a variety of instruments. In particular, a variety of meters can be attached at several points, to the bioreactor, the sulphate-containing water led into the bioreactor, a circuit separate from the bioreactor (not shown) and/or the water leaving the bioreactor; these can include, for example, thermometers, pH meters, pressure gauges, sulphate meters, hydrogen sulphide meters, redox potential meters, gas composition meters, water flow meters, and nutrient meters. These instruments allow professionals in the industry to adjust the process so as to maximize the production of hydrogen sulphide.

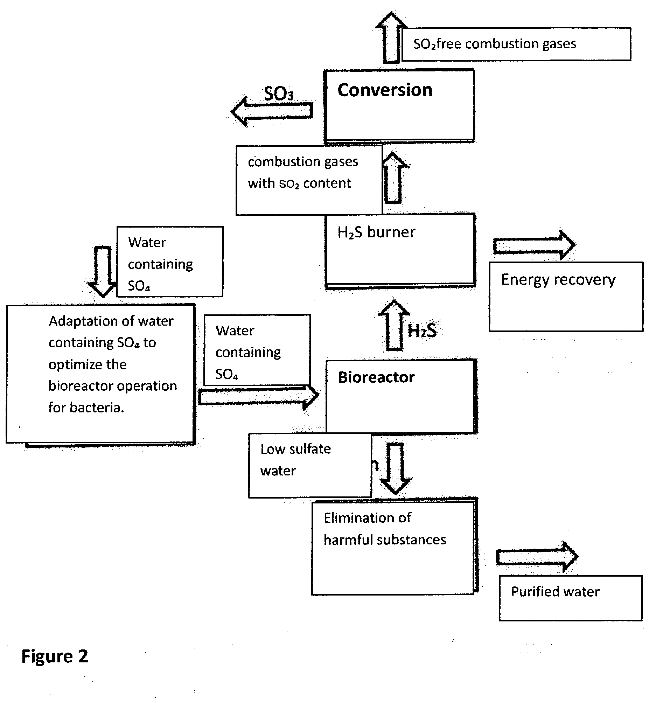

Figure 2 shows the implementation of a second method contained by the disclosure, in which the process shown in Figure 1 is expanded by adding removal of sulphur dioxide from the combustion gases, removal of harmful substances from water exiting the process, and adjustment of the sulphate-containing water fed to the bioreactor to make it optimal for the bacterial action reducing bioreactor sulphate to hydrogen sulphide; this is preferably performed by removing substances harmful to bacterial action, for example, using various adsorbents, e.g. in a precipitation reactor, and by optimizing nutrient concentrations, temperature, pressure, and pH to maximize production of hydrogen sulphide. In the process shown in Figure 2, the exit water and the combustion gases released in the process can thus be released directly to the environment without causing harm.

In one implementation of the disclosure, sulphate-containing water is directed temporarily past the bioreactor and directly to the precipitation reactor.

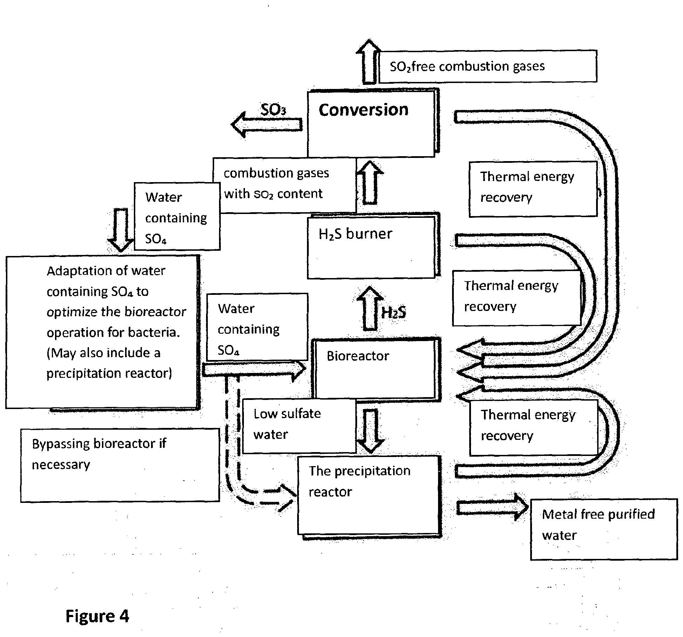

In one implementation of the disclosure, the sulphate-containing water entering the bioreactor is adjusted to optimise it for the bacterial action that reduces sulphate to hydrogen sulphide in the bioreactor; this is done in the precipitation reactor, in which also sulphate can be removed if necessary and water emerging from the precipitation reactor can be directed past the bioreactor if necessary, so that a precipitation reactor following the bioreactor is not required. This is also the case in the implementations of the disclosure shown in Figures 4, 5 and 6.

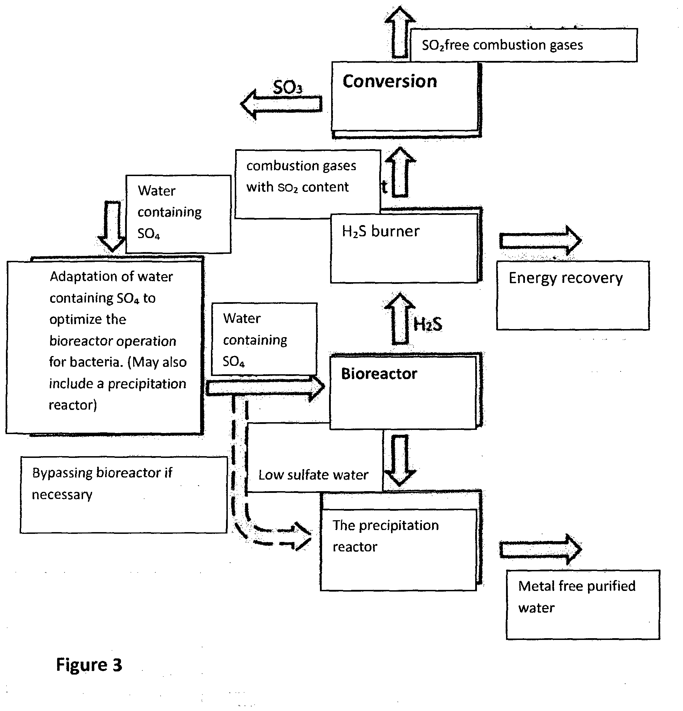

Figure 3 shows a further implementation of a method contained by the disclosure, in which the combustion gases are directed to the converter to oxidise sulphur dioxide into sulphur trioxide. Where necessary, the sulphur dioxide can be concentrated in a separate combustion gas scrubber. In addition, the water emerging from the bioreactor is purified by precipitation of environmentally harmful substances, such as metals in the precipitation reactor, preferably in a lime reactor. Preferably, the precipitation reactor can be used as needed to precipitate unreacted sulphate in the water entering the bioreactor. Optionally, the bioreactor can also be temporarily overridden by diverting sulphate-containing water directly to the precipitation reactor, in which case sulphate can be precipitated from the water as gypsum, which may be necessary, for example, if the bioreactor suffers a malfunction or during a maintenance shutdown. In this case, however, much more of the precipitating agent, e.g. calcium hydroxide, is needed, and the energy cannot be utilized. Preferably, the process shown in Figure 3 can be used when handling warm sulphate-containing water. The advantage of the additional lime reactor is that environmentally harmful metals can be removed, and that the reliability of the facility is greatly improved, since malfunctions of the bioreactor do not affect the concentration of sulphate in the water exiting the process.

Figure 4 shows a further implementation of aa method contained by the disclosure, which can be used to treat cool and cold sulphate-containing water. Water may have to be processed in very cold conditions, at temperatures close to zero, and possibly at temperatures of -10 ºC, -20 ºC, or even -30 ºC. The temperature can also vary noticeably and momentarily depending on environmental conditions and the time of year. From the viewpoint of bioreactor operation, it is essential that the temperature of the bioreactor can be evenly maintained at the temperature best suited to the bacterial strains that produce hydrogen sulphide. This maximizes the yield of hydrogen sulphide. Typically, overly cold bioreactor conditions markedly reduce the yield of hydrogen sulphide, in which case the size of the bioreactor must be significantly increased. In a process contained by the disclosure, the bioreactor is heated by the energy released from the processing of sulphur, preferably from the hydrogen sulphide incineration unit and/or the treatment of flue gas and/or energy recovered from water exiting the bioreactor or precipitation reactor. Thus, the size of the bioreactor can be minimized, which reduces substantially the size of the required investment. Heating the bioreactor can be carried out preferably by heating the sulphate-containing water entering the bioreactor, by heating the bioreactor water in a separate additional circuit, or by heating the bioreactor itself, for instance using heating pipes passing through the bioreactor. Heating can be implemented, for example, using commercially available heat exchangers. If all the energy available from the process is not required to heat the bioreactor, then, for example, extra energy from the hydrogen sulphide incineration unit can be used to generate electricity.

According to one implementation of the disclosure, if the process does not produce enough heat energy then the bioreactor can also be heated by energy produced outside the process. Another alternative implementation is to increase the consumption of lime in the precipitation reactor possibly used in the process, so that the greater sulphate concentration in water exiting the bioreactor can be sufficiently reduced. A third alternative implementation involves temporarily reducing the amount of sulphate-containing water fed to the bioreactor, but this would probably require quite a large storage pool for sulphate-containing water. The temperature of the bioreactor can also be increased by improving the insulation of the bioreactor walls, and/or by increasing the size of the bioreactor and/or by optimizing the shape of the bioreactor.

In one implementation of the disclosure, sulphur dioxide is converted to sulphur trioxide (conversion) which is absorbed in water in an absorption unit (absorption), and used to manufacture sulphuric acid.

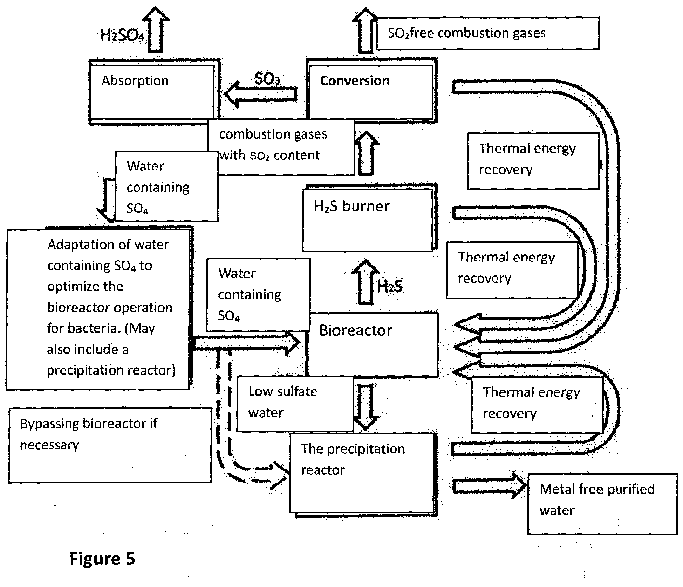

Figure 5 shows a further implementation of a method contained by the disclosure, in which sulphur dioxide removed from the combustion gases is used preferably in the manufacture of sulphuric acid. In this case, sulphur dioxide is created preferably using a vanadium pentoxide catalyst, and thereafter produces high-quality sulphuric acid. The sulphuric acid thus generated can be used in other processes required by the facility, or it may be sold for use elsewhere in a number of different processes.

In one implementation of the disclosure, the energy released in conversion is recovered and utilized, preferably in the said method.

Again, in one implementation of the disclosure, the energy released in the absorption unit is recovered and utilized, preferably in the said method.

In a further implementation of the disclosure, heat energy from water removed from the precipitation reactor is recovered and used, preferably in the said method.

In a further implementation of the disclosure, environmentally harmful substances are removed form water exiting the bioreactor, preferably metals and residual sulphate. Preferably, environmentally harmful substances are removed by precipitation in the precipitation reactor, most preferably in a lime reactor. Preferably, heat energy from water exiting the precipitation reactor is recovered and used by means of a heat pump.

According to an implementation, heat energy from water removed from the bioreactor is recovered and used, preferably in the said method.

In a preferred implementation, energy recovered in various stages of sulphur treatment and in various units is utilized for heating the bioreactor or maintaining the bioreactor at its optimum temperature.

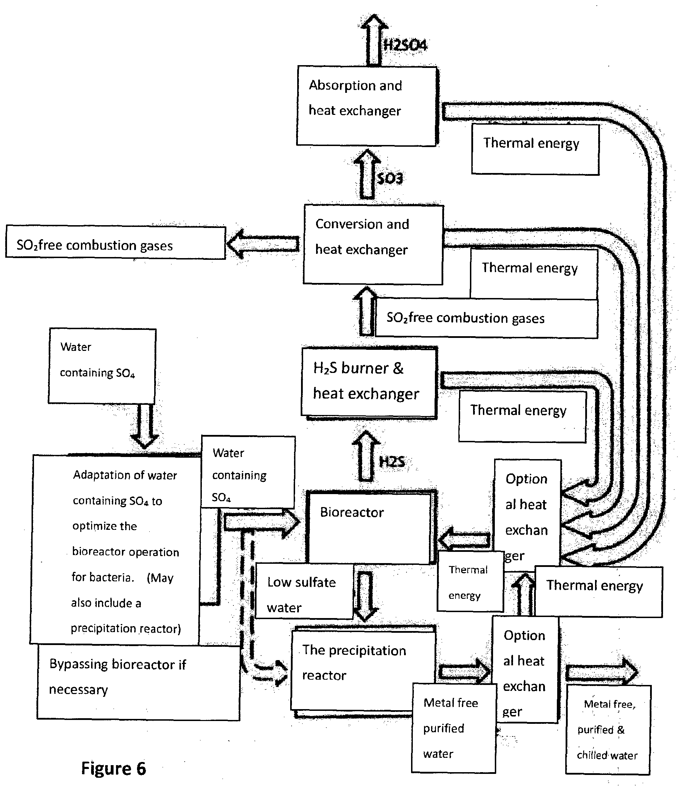

Figure 6 shows a further implementation of a method contained by the disclosure, in which heat produced in the precipitation reactor is recovered preferably by means of a heat pump. Additionally, metals can be removed from the water exiting the precipitation reactor before it is passed on to the heat pump. At different stages of the process, such as the incineration of hydrogen sulphide, conversion of sulphur dioxide, and absorption, the heat produced by the reaction can be recovered by heat exchangers and returned for use in the bioreactor. The amount of heat generated determines the kind of equipment that should be used to recover heat energy. Essentially, the equipment used is commercially available.

Recovery of excess heat from a process contained by the disclosure makes it possible for the bioreactor, preferably an anaerobic bioreactor, to be kept at the optimum temperature, such as 20-40 ºC, or preferably 30-40 °C, without requiring an energy supply external to the process.

A process contained by the disclosure can preferably use one or more bioreactors, a possible precipitation reactor, a hydrogen sulphide incineration unit, a possible sulphuric acid manufacturing unit, and a possible combustion gas scrubber. Thus the susceptibility to interruption of the process contained by the disclosure can be reduced and the process can be maintained during malfunctions or maintenance shutdowns of individual components. The bioreactor/bioreactors can be either batch type, loaded and emptied from time to time, or continuous type, operating on a throughput principal. The form of a single bioreactor may be e.g. cylindrical, and the sulphate-containing water that it handles can be preferably drained, for example, from the top down.

A preferred implementation of the disclosure provides a treatment process for sulphate-containing water, in which sulphate-containing water is fed to an anaerobic bioreactor, where the anaerobic bacterial strain that reduces sulphate to hydrogen sulphide converts the sulphate in the water to hydrogen sulphide gas, which is directed for incineration in the hydrogen sulphide incineration unit, and where energy released in the process is utilized, preferably in the said process.

In another preferred implementation, the disclosure provides a treatment process for sulphate-containing water, in which sulphate-containing water fed to the bioreactor is cleared of substances harmful to the anaerobic bacterial strain that reduces sulphate to hydrogen sulphide and/or the nutrient concentrations, temperature, and/or pH of the bioreactor are optimized to maximize production of hydrogen sulphide.

A preferred implementation of the disclosure provides a treatment process for sulphate-containing water in which the combustion gases produced by the hydrogen sulphide incineration unit are passed to catalytic conversion.

In a preferred implementation, the disclosure provides a treatment process for sulphate-containing water, in which sulphur dioxide is oxidized to sulphur trioxide.

In a preferred implementation, the disclosure provides a treatment process for sulphate-containing water, in which sulphur dioxide in the combustion gases from the hydrogen sulphide incineration unit is used to produce sulphuric acid.

In a preferred implementation, the disclosure provides a treatment process for sulphate-containing water, in which environmentally harmful substances are removed from water leaving the treatment process.

In a preferred implementation, the disclosure provides a treatment process for sulphate-containing water, in which metals and residual sulphate are removed from the water exiting the bioreactor by precipitation in a precipitation reactor.

In a preferred implementation, the i disclosure provides a treatment process for sulphate-containing water, in which sulphate-containing water can be led past the bioreactor directly to the precipitation reactor, which is preferably a lime reactor.

In a preferred implementation, the disclosure provides a treatment process for sulphate-containing water, in which energy released from the hydrogen sulphide incineration unit is utilized, preferably in the said process.

In a preferred implementation the disclosure provides a treatment process for sulphate-containing water, in which energy released in conversion is utilized, preferably in the said process.

In a preferred implementation, the disclosure provides a treatment process for sulphate-containing water, in which energy released in absorption is utilized, preferably in the said process.

In a preferred implementation, the disclosure provides a treatment process for sulphate-containing water, in which heat energy from water leaving the bioreactor is utilized, preferably in the said process.

In a preferred implementation, the disclosure provides a treatment process for sulphate-containing water, in which heat energy from water leaving the precipitation reactor is utilized, preferably in the said process.

In a preferred implementation, the disclosure provides a treatment process for sulphate-containing water, in which energy released by the process is used in heating the bioreactor.

The following describes the invention with the aid of an example, however without limiting the invention thereto.

### Example 1

Sulphate-containing water was passed to a reactor as shown in Figure 6 at 100 l/min (10 g/l of sulphate). The sulphate existed in the water stream as sodium sulphate. The carbon source used was a stoichiometric amount of acetic acid, relative to the sulphate. The temperature of the bioreactor was adjusted to 35 ºC and to improve the separation of hydrogen sulphide, the pressure of the bioreactor was maintained at 0.4 bar. The bioreactor was warmed using internal water circulation piping (not shown). Since the water-solubility of hydrogen sulphide is large, the negative pressure of the reactor, and the large amount of inert gases encouraged the yield of hydrogen sulphide in the gas stream produced from the bioreactor.

A test afforded a molar flow rate of 9.34 moles/min of hydrogen sulphide (the theoretical maximum is 10.4 mol/min) in the bioreactor gas stream.

Almost 90% of the theoretical total amount of hydrogen sulphide was gained as the starting material for the sulphuric acid process. The total amount of heat released from the sulphuric acid process per time unit was 133.4 kW.

This amount of heat, which was collected as shown in Figure 6 from four (arrows: heat energy) different phases, heated the sulphate-containing water fed to the bioreactor in the experiment (100 l/min, 10 g/l of sulphate) by 19.2 degrees. Heat integration thus used the heat of water leaving the bioreactor, heat produced in the hydrogen sulphide incinerator, heat recovered by a heat exchanger, heat released in conversion of sulphur dioxide, and heat released in absorption.

The heat energy available from the process was sufficient to maintain the bioreactor at the target temperature of 35 °C.

## Claims

1. A method for processing cold sulphate-containing water, **characterised in that** the sulphate-containing water is processed in very cold conditions, at temperatures close to 0° C and that the method comprises steps in which:
(i) cold sulphate-containing water is directed into a bioreactor,
(ii) the anaerobic bacterial strain in the bioreactor, which reduces sulphate to hydrogen sulphide, converts the sulphate content of the water to hydrogen sulphide gas,
(iii) the resulting hydrogen sulphide gas is separated from the water and directed for incineration in a hydrogen sulphide incineration unit, which generates combustion gases,
(iv) residual water is removed from the bioreactor and the thermal energy contained in the water is captured, and;
(v) energy released in steps (ii) - (iii) is captured and utilized in said method,
wherein the temperature of the bioreactor is maintained at the temperature best suited for the bacterial strains that produce hydrogen sulphide, wherein the bioreactor is heated by the thermal energy captured in steps (iv) and (v).

2. A method according to claim 1, **characterised in that** substances harmful to the anaerobic bacterial strain that reduces sulphate to hydrogen sulphide are removed from the sulphur-containing water entering the bioreactor.

3. A method according to claim 1, **characterised in that** the conditions in the bioreactor are adjusted so as to maximize the production of hydrogen sulphide, which conditions are selected from the group of the bioreactor's nutrient concentration, temperature, pH, and reactor pressure.

4. A method according to any of claims 1-3, **characterised in that** sulphur dioxide contained in the combustion gases produced by the hydrogen sulphide incineration unit is oxidized in a conversion unit to produce sulphur trioxide, and optionally, the energy released in the conversion unit is recovered and utilized, preferably in the said method.

5. A method according to claim 2, **characterised in that** compounds containing elements As, Ni, and Co are recovered from the process of removing substances harmful to bacteria.

6. A method according to claim 4, **characterised in that** the sulphur trioxide formed in the conversion unit is absorbed in water in an absorption unit to form sulphuric acid.

7. A method according to claim 6, **characterised in that** the energy released in the absorption unit is recovered and utilized, preferably in the said method.

8. A method according to claim 1, **characterised in that** environmentally harmful substances, preferably metals and residual sulphate, are removed from water taken from the bioreactor.

9. A method according to claim 8, **characterised in that** environmentally harmful substances are removed from water taken from the bioreactor by precipitation in a precipitation reactor, preferably a calcium reactor.

10. A method according to claim 9, **characterised in that** the pH of the water removed from the bioreactor is adjusted and environmentally harmful substances are removed by precipitation of metals in said precipitation reactor.

11. A method according to claims 9 or 10, **characterised in that** a second precipitation reactor is placed before the bioreactor to remove metals harmful to bacterial activity.

12. A method according to claims 10 and 11, **characterised in that** the metals are precipitated as sulphides and/or hydroxides in said precipitation reactors.

13. A method according to claim 1, 2, 8, or 9, **characterised in that** heat energy from water removed from the bioreactor and/or from the precipitation reactor is recovered and used, preferably in the method of said claims.

14. A method according to claims 1, 4, 7, and 13, **characterised in that** heat the recovered energy is utilized for heating the bioreactor or for maintaining the optimum temperature of the bioreactor.

## Patentansprüche

1. Verfahren zur Verarbeitung von kaltem sulfathaltigem Wasser, **dadurch gekennzeichnet, dass** das sulfathaltige Wasser unter sehr kalten Bedingungen verarbeitet wird, bei Temperaturen nahe 0 °C, und dass das Verfahren Schritte umfasst, in denen
(i) kaltes sulfathaltiges Wasser in einen Bioreaktor geleitet wird,
(ii) der anaerobe Bakterienstamm in dem Bioreaktor, der Sulfat zu Schwefelwasserstoff reduziert, den Sulfatgehalt des Wassers in Schwefelwasserstoffgas umwandelt,
(iii) das resultierende Schwefelwasserstoffgas von dem Wasser getrennt und zur Verbrennung in eine Schwefelwasserstoffverbrennungseinheit geleitet wird, die Verbrennungsgase generiert,
(iv) Restwasser aus dem Bioreaktor entfernt wird, und die in dem Wasser enthaltene Wärmeenergie gewonnen wird, und
(v) in den Schritten (ii) bis (iii) freigesetzte Energie gewonnen und in dem Verfahren genutzt wird,
wobei die Temperatur des Bioreaktors auf der Temperatur gehalten wird, die für die Bakterienstämme am besten geeignet ist, die Schwefelwasserstoff produzieren, wobei der Bioreaktor durch die Wärmeenergie erwärmt wird, die in den Schritten (iv) und (v) gewonnen wurde.

2. Verfahren nach Anspruch 1, **dadurch gekennzeichnet, dass** Substanzen, die für die anaeroben Bakterienstämme schädlich sind, die Sulfat zu Schwefelwasserstoff reduzieren, aus dem schwefelhaltigen Wasser entfernt werden, das in den Bioreaktor eintritt.

3. Verfahren nach Anspruch 1, **dadurch gekennzeichnet, dass** die Bedingungen in dem Bioreaktor angepasst werden, um so die Produktion von Schwefelwasserstoff zu maximieren, wobei die Bedingungen ausgewählt sind aus der Gruppe der Nährstoffkonzentration, Temperatur, dem pH-Wert des Bioreaktors sowie dem Reaktordruck.

4. Verfahren nach einem der Ansprüche 1 bis 3, **dadurch gekennzeichnet, dass** Schwefeldioxid, das in den Verbrennungsgasen enthalten ist, die durch die Schwefelwasserstoffverbrennungseinheit produziert werden, in einer Umwandlungseinheit oxidiert wird, um Schwefeltrioxid zu produzieren, und wobei gegebenenfalls die in der Umwandlungseinheit freigesetzte Energie zurückgewonnen und genutzt wird, vorzugsweise in dem Verfahren.

5. Verfahren nach Anspruch 2, **dadurch gekennzeichnet, dass** Verbindungen, die die Elemente As, Ni und Co enthalten, aus dem Prozess des Entfernens von Substanzen, die für Bakterien schädlich sind, zurückgewonnen werden.

6. Verfahren nach Anspruch 4, **dadurch gekennzeichnet, dass** das Schwefeltrioxid, das in der Umwandlungseinheit gebildet wurde, in Wasser in einer Absorptionseinheit unter Bildung von Schwefelsäure absorbiert wird.

7. Verfahren nach Anspruch 6, **dadurch gekennzeichnet, dass** in der Absorptionseinheit freigesetzte Energie zurückgewonnen und genutzt wird, vorzugsweise in dem Verfahren.

8. Verfahren nach Anspruch 1, **dadurch gekennzeichnet, dass** umweltbelastende Substanzen, vorzugsweise Metalle und restliches Sulfat, aus Wasser entfernt werden, das aus dem Bioreaktor genommen wird.

9. Verfahren nach Anspruch 8, **dadurch gekennzeichnet, dass** umweltbelastende Substanzen durch Ausfällung in einem Ausfällungsreaktor, vorzugsweise in einem Calciumreaktor, aus Wasser entfernt werden, das aus dem Bioreaktor genommen wird.

10. Verfahren nach Anspruch 9, **dadurch gekennzeichnet, dass** der pH-Wert des Wassers, das aus dem Bioreaktor entfernt wird, angepasst wird und umweltbelastende Substanzen durch Ausfällung von Metallen in dem Ausfällungsreaktor entfernt werden.

11. Verfahren nach Anspruch 9 oder 10, **dadurch gekennzeichnet, dass** ein zweiter Ausfällungsreaktor vor dem Bioreaktor platziert wird, um Metalle zu entfernen, die für die Bakterienaktivität schädlich sind.

12. Verfahren nach den Ansprüchen 10 und 11, **dadurch gekennzeichnet, dass** die Metalle in den Ausfällungsreaktoren als Sulfide und/oder Hydroxide ausgefällt werden.

13. Verfahren nach Anspruch 1, 2, 8 oder 9, **dadurch gekennzeichnet, dass** Wärmeenergie aus Wasser, das aus dem Bioreaktor und/oder aus dem Ausfällungsreaktor entfernt wurde, zurückgewonnen und verwendet wird, vorzugsweise in dem Verfahren der Ansprüche.

14. Verfahren nach den Ansprüchen 1, 4, 7 und 13, **dadurch gekennzeichnet, dass** die zurückgewonnene Energie zum Erwärmen des Bioreaktors oder zum Halten der optimalen Temperatur des Bioreaktors genutzt wird.

## Revendications

1. Procédé de traitement d'eau froide contenant du sulfate, **caractérisé en ce que** l'eau contenant du sulfate est traitée dans des conditions très froides, à des températures proches de 0 °C, et **en ce que** le procédé comprend des étapes dans lesquelles :
(i) de l'eau froide contenant du sulfate est dirigée dans un bioréacteur,
(ii) la souche bactérienne anaérobie dans le bioréacteur, qui réduit le sulfate en sulfure d'hydrogène, convertit la teneur en sulfate de l'eau en sulfure d'hydrogène gazeux,
(iii) le sulfure d'hydrogène gazeux résultant est séparé de l'eau et dirigé pour incinération dans une unité d'incinération de sulfure d'hydrogène, qui génère des gaz de combustion,
(iv) de l'eau résiduelle est retirée du bioréacteur et l'énergie thermique contenue dans l'eau est capturée, et
(v) l'énergie libérée aux étapes (ii)-(iii) est capturée et utilisée dans ledit procédé,
dans lequel la température du bioréacteur est maintenue à la température la plus appropriée pour les souches bactériennes qui produisent du sulfure d'hydrogène, le bioréacteur étant chauffé par l'énergie thermique capturée aux étapes (iv) et (v).

2. Procédé selon la revendication 1, **caractérisé en ce que** des substances nuisibles à la souche bactérienne anaérobie qui réduit le sulfate en sulfure d'hydrogène sont retirées de l'eau contenant du soufre entrant dans le bioréacteur.

3. Procédé selon la revendication 1, **caractérisé en ce que** les conditions dans le bioréacteur sont ajustées de manière à maximiser la production de sulfure d'hydrogène, lesquelles conditions sont choisies dans le groupe constitué par la concentration de nutriments, la température, le pH, et la pression de réacteur du bioréacteur.

4. Procédé selon l'une quelconque des revendications 1 à 3, **caractérisé en ce que** le dioxyde de soufre contenu dans les gaz de combustion produits par l'unité d'incinération de sulfure d'hydrogène est oxydé dans une unité de conversion pour produire du trioxyde de soufre, et éventuellement, l'énergie libérée dans l'unité de conversion est récupérée et utilisée, de préférence dans ledit procédé.

5. Procédé selon la revendication 2, **caractérisé en ce que** des composés contenant les éléments As, Ni et Co sont récupérés à partir du traitement de retrait de substances nuisibles aux bactéries.

6. Procédé selon la revendication 4, **caractérisé en ce que** le trioxyde de soufre formé dans l'unité de conversion est absorbé dans de l'eau dans une unité d'absorption pour former de l'acide sulfurique.

7. Procédé selon la revendication 6, **caractérisé en ce que** l'énergie libérée dans l'unité d'absorption est récupérée et utilisée, de préférence dans ledit procédé.

8. Procédé selon la revendication 1, **caractérisé en ce que** des substances nuisibles à l'environnement, de préférence des métaux et du sulfate résiduel, sont retirés de l'eau prélevée du bioréacteur.

9. Procédé selon la revendication 8, **caractérisé en ce que** des substances nuisibles à l'environnement sont retirées de l'eau prélevée du bioréacteur par précipitation dans un réacteur de précipitation, de préférence un réacteur à calcium.

10. Procédé selon la revendication 9, **caractérisé en ce que** le pH de l'eau retirée du bioréacteur est ajusté et des substances nuisibles à l'environnement sont retirées par précipitation de métaux dans ledit réacteur de précipitation.

11. Procédé selon les revendications 9 ou 10, **caractérisé en ce qu'**un deuxième réacteur de précipitation est placé avant le bioréacteur pour retirer des métaux nuisibles à l'activité bactérienne.

12. Procédé selon les revendications 10 et 11, **caractérisé en ce que** les métaux sont précipités sous forme de sulfures et/ou d'hydroxydes dans lesdits réacteurs de précipitation.

13. Procédé selon la revendication 1, 2, 8, ou 9, **caractérisé en ce que** de l'énergie thermique provenant de l'eau retirée du bioréacteur et/ou du réacteur de précipitation est récupérée et utilisée, de préférence dans le procédé desdites revendications.

14. Procédé selon les revendications 1, 4, 7, et 13, **caractérisé en ce que** l'énergie récupérée est utilisée pour chauffer le bioréacteur ou pour maintenir la température optimale du bioréacteur.
